# EUROPEAN PATENT APPLICATION

(11) **EP 0 732 370 A2**
(43) Date of publication of application: **18.09.1996**
(21) Application number: 96301462.6
(22) Date of filing: 05.03.1996
(51) Int. Cl.: C08L 71/12, C08L 81/02

(54) **Poly(phenylene ether) compositions**

(30) Priority: 17.03.1995 US 405630
(71) Applicant: GENERAL ELECTRIC COMPANY, Schenectady, NY 12345 (US)
(72) Inventor: Brown, Sterling B., Schenectady, New York 12309 (US); Ishida, Hiromi, Moka City, Tochigi Pref. (JP); Kubo, Hiroshi, Moka City, Tochigi Pref. (JP); Hwang, Chorng-Fure R., Cary, North Carolina 27513 (US); Kabaya, Hidekazu, Moka City, Tochigi Pref. (JP); Ohtomo, Takashi, Utsunomiya City, Tochigi Pref. (JP)
(74) Representative: Szary, Anne Catherine

(57) **Abstract**

A composition is provided containing poly(phenylene ether) resin selected from the group consisting of unfunctionalized poly(phenylene ether) resins, functionalized poly(phenylene ether) resins, and mixtures of unfunctionalized poly(phenylene ether) resins and functionalized poly(phenylene ether) resins, a poly(arylene sulfide) resin, an epoxy functional olefinic elastomer and an elastomeric block copolymer. The composition exhibits enhanced morphology and physical properties such as ductility. The compositions are useful for making molded articles such as automotive panels.

## Description

The present invention relates to impact modified poly(phenylene ether) resin/poly(arylene sulfide) resin compositions, and more particularly relates to epoxy functional poly(phenylene ether) resin, poly(phenylene sulfide) resin, epoxy functional olefinic elastomer, and elastomeric block copolymer compositions.

### Description of the Related Art

Blends of poly(phenylene ether) and poly(phenylene sulfide) resins are generally known, but such blends are typically brittle absent the presence of an impact modifier. The Japanese patent application number JP 04318067-A (November 9, 1992) discloses poly(phenylene sulfide) resin compositions comprising (A) 90% to 10 wt % poly(phenylene sulfide), (B) 100 parts. wt. of resin composition constructed of 90% to 10 wt % of poly(phenylene ether), (C) 1% to 50% of modified polyolefin derived from alpha, beta-unsaturated carboxylic acid glycidyl ester and 1% to 50 wt % of thermoplastic elastomer. Conventional non-functional poly(phenylene ether) resins in such compositions however can result in an impact modifier dispersion morphology which is less than optimum.

Accordingly, there is a need to provide an impact modified poly(phenylene sulfide)/poly(phenylene ether) resins composition which exhibits an impact modifier distribution morphology which results in enhanced mechanical properties, for example, enhanced notched Izod impact properties.

### Summary of the Invention

The present invention comprises a composition of poly(phenylene ether) resin selected from the group consisting of unfunctionalized poly(phenylene ether) resins, functionalized poly(phenylene ether) resins, and mixtures of unfunctionalized poly(phenylene ether) resins and functionalized poly(phenylene ether) resins, poly(arylene sulfide) resins, epoxy functional olefinic elastomers and elastomeric block copolymers. The compositions exhibit an impact modifier distribution morphology which provides enhanced mechanical properties.

### Brief Description of the Drawings

Figure 1 is a transmission electron micrograph depicting the morphology of comparative sample B (CB).

Figure 2 is a transmission electron micrograph depicting the morphology of comparative sample C (CC).

Figure 3 is a transmission electron micrograph depicting the morphology of example 1 (E1).

### Detailed Description of the Invention

The compositions of the invention are obtained by combining poly(phenylene ether) resins (herein after known as "PPE") selected from the group consisting of unfunctionalized poly(phenylene ether) resins, functionalized poly(phenylene ether) resins, and mixtures of unfunctionalized poly(phenylene ether) resins and functionalized poly(phenylene ether) resins, poly(arylene sulfide) resin (herein after known as "PAS"), epoxy functional olefinic elastomer and elastomeric block copolymer. Suitable functional moieties on the PPE include amino, hydroxy, carboxylic acid, epoxy and anhydride. Epoxy functionalized PPE are a preferred class of functionalized PPE of the present invention PPE capped with epoxy triazine compounds are especially preferred. The resulting compositions may exhibit either a matrix phase of PAS having small PPE particles dispersed therein or a matrix of PPE having small PAS particles dispersed within, and having the epoxy functional olefinic elastomer and the elastomeric block copolymer located mainly at the interface of the PPE and PAS. The morphology of concentrating the dual impact modifiers at the interface is an unexpected result which unexpectedly and surprisingly yields enhanced impact properties over compositions lacking the functionality for the PPE. The expected result is for the epoxy functional olefinic elastomer to be randomly dispersed in the PAS and the elastomeric block copolymer to be randomly dispersed in the PPE. Furthermore, the present compositions exhibit enhanced heat distortion temperatures at high loads (264 psi), exhibit reduced shrink, and exhibit reduced flash during molding over compositions lacking the PPE. As previously mentioned, the unexpected morphology of the present compositions exhibits unexpectedly and surprisingly enhanced mechanical properties, for example, notched Izod impact strengths.

The PPE comprise a plurality of structural units having the following formula (I): 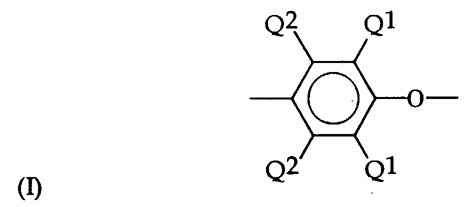 In each of said units independently, each Q¹ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy, carbonoxy or halohydrocarbonoxy as defined in Q¹. Examples of suitable primary lower alkyl groups are methyl, ethyl, n-propyl; n-butyl, isobutyl, n-amyl, isoamyl, 2-methyl-butyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each Q¹ is alkyl or phenyl, especially C₁₋₄ alkyl, and each Q² is hydrogen.

Both functional homopolymers and copolymers of PPE are included. Suitable homopolymers are those containing, for example, 2,6-dimethyl-1,4-phenylene ether units. Suitable copolymers include random copolymers containing such units in combination with (for example) 2,3,6-trimethyl-1,4-phenylene ether units. Many suitable random copolymers, as well as homopolymers, are disclosed in the patent literature.

Also included are PPE containing moieties which modify properties such as molecular weight, melt viscosity and/or impact strength. Such moiety containing polymers may be prepared by grafting onto the PPE such vinyl monomers as acrylonitrile and vinyl aromatic compounds (e.g., styrene). The product typically contains both grafted and ungrafted moieties. Also included are coupled PPE in which the coupling agent is reacted in known manner with the hydroxy groups of two PPE chains to produce a higher molecular weight polymer containing the reaction product of the hydroxy groups and the coupling agent Illustrative coupling agents are low molecular weight polycarbonates, quinones, heterocycles and formals.

The PPE generally has a number average molecular weight within the range of about 3,000-40,000 and a weight average molecular weight within the range of about 20,000-60,000, as determined by gel permeation chromatography. Its intrinsic viscosity is most often in the range of about 0.19-0.8 dl./g., as measured in chloroform at 25°C.

The PPE are typically prepared by the oxidative coupling of at least one monohydroxyaromatic compound. Particularly useful and readily available monohydroxyaromatic compounds are 2,6-xylenol (wherein each Q¹ is methyl and each Q² is hydrogen), and 2,3,6-trimethylphenol (wherein each Q¹ and one Q² is methyl and the other Q² is hydrogen).

A variety of catalyst systems are known for the preparation of PPE by oxidative coupling. There is no particular limitation as to catalyst choice and any of the known catalysts can be used. For the most part, they contain at least one heavy metal compound such as a copper, manganese or cobalt compound, usually in combination with various other materials.

A first class of preferred catalyst systems consists of those containing a copper compound. Such catalysts are disclosed, for example, in U.S. Pat. Nos. 3,306,874, 3,306,875, 3,914,266 and 4,028,341. They are usually combinations of cuprous or cupric ions, halide (i.e., chloride, bromide or iodide) ions and at least one amine.

Catalyst systems containing manganese compounds constitute a second preferred class. They are generally alkaline systems in which divalent manganese is combined with such anions as halide, alkoxide or phenoxide. Most often the manganese is present as a complex with one or more complexing and/or chelating agents such as dialkylamines, alkanolamines, alkylenediamines, o-hydroxyaromatic aldehydes, o-hydroxyazo compounds and o-hydroxyoximes.

It is preferable for at least some of the PPE to be a "functionalized PPE." Functionalized PPE are sometimes referred to as "compatibilizing PPE." In the final blend, the compatibilizing or functionalized PPE is commonly referred to as a "compatibilized PPE" because of the resultant improved compatibility between the functionalized PPE and the other components. It is believed that various reactions can occur between the functionalized PPE and at least one of the other components of the blend, for example, the poly(arylene sulfide) resin, the epoxy functional olefinic elastomer, and the elastomeric block copolymer. Accordingly, appropriate functionalized PPE's are those which affect the compatibility of the PPE with the various components of the blend. Compatibility is meant to include the minimization of gross phase separation between the components of the blend. Indicators of improved compatibilization include, for example, increased tensile properties, reduced delamination tendency, increased ductility and improved phase morphology stabilisation. It is through the effect of improving the compatibility of the blend components which determines, in part, the desirable physical properties of the blend.

One way to prepare an appropriate functionalized PPE is to functionalize the PPE by reacting the PPE with at least one compound having both (i) a carbon-carbon double bond or a carbon-carbon triple bond and (ii) a carboxylic acid, acid anhydride, acid amide, imido, carboxylic acid ester, epoxy, amino, hydroxyl or carboxylic acid ammonium salt These compounds are sometimes referred to as compatibilizers or functionalizers. Illustrative compounds used to accomplish the functionalization of the PPE include maleic anhydride, fumaric acid, maleimides such as N-phenylmaleimide and 1,4-phenylene-bis-methylene-α,α'-bismaleimide, maleic hydrazide, methylnadic anhydride, fatty oils (e.g., soybean oil, tung oil, linseed oil, sesame oil), unsaturated carboxylic acids such as acrylic, crotonic, methacrylic acid and oleic acid, unsaturated alcohols such as allyl alcohol and crotyl alcohol and unsaturated amines such as allylamine and trialkyl amine salts of unsaturated acids such as triethylammonium fumarate and tri-n-butylammonium fumarate. Such typical reagents for preparing a useful functionalized PPE are described in U.S. Pat Nos. 4,315,086, 4,755,566, and 4,888,397 which are incorporated herein by reference. Citric acid is also useful for preparing an appropriate functionalized PPE, as described in U.S. Pat. No. 5,000,897 which is incorporated herein as a reference.

The PPE described herein may comprise reactive epoxy groups. Suitable epoxy functional PPE are described in Brown et al, U.S. Pat. Nos. 4,994,531 and 4,994,525, both of which are hereby incorporated by reference. A method for the preparation of the functionalized PPE may comprise reacting a PPE with at least one polymerizable olefinic compound of the following formula (II) 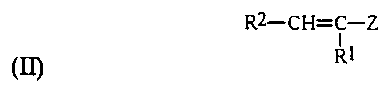 wherein R¹ is hydrogen or alkyl, R² is hydrogen, or a reactive group containing at least one epoxy, or a substituent substantially inert to an epoxy and Z is a reactive group containing at least one epoxy, wherein R² and Z can be the same, for example, bis-glycidyl maleate.

According to the present invention, the PPE may be reacted with at least one polymerizable olefinic compound. The R¹ value of formula (II) may be hydrogen or alkyl (i.e., alkyl of up to 7 carbon atoms) and is preferably hydrogen or methyl. The epoxy-containing group is preferably a glycidyl group. Suitable compounds include, for example, glycidyl methacrylate, glycidyl acrylate, glycidyl ethyl maleate, glycidyl ethyl fumarate, allyl glycidyl ether, bis-glycidyl maleate, and bis-glycidyl fumarate. The reaction may be conducted in solution in a substantially inert diluent such as toluene, xylene, chlorobenzene, o-dichlorobenzene or 1,2,4-trichlorobenzene, followed by isolation of the functionalized PPE by conventional operations such as precipitation by a non-solvent therefor. It is also possible to conduct the reaction in the melt Melt reactions are often conveniently carried out in an extruder or similar equipment.

The reaction between the PPE and the olefinic compound is typically conducted at temperatures in the range of about 100°-350° C. The proportions of reagents are subject to wide variation, depending on the degree of functionalization desired and the conditions used; the preferred weight ratio of olefinic compound to PPE is typically in the range of about 0.1% to 4% by weight based on the amount of weight of the PPE for melt reactions. For solutions reactions, the weight ratio of olefinic compound to PPE may, for example, be between about 0.1% to about 8.5% by weight or higher, based on the amount of weight of the PPE.

It is sometimes advantageous to use an initiator in the preparation of the functionalized PPE with the olefinic compound. Suitable initiators for use in the current invention include free radical initiators generally known to the art. Specific initiators include various peroxides and hydroperoxides. Specific examples include benzoyl peroxide, dicumyl peroxide, 2,5-dimethyl-2,5-di(t-butylperoxy)hexyne-3 and cumene peroxide, with 2,5,dimethyl-2,5-di(t-butylperoxy)hexyne-3 being preferred. When it is used, the amount of initiator used can vary of from about 0.05 weight percent to about 0.5 weight percent relative to the weight of the PPE.

It is frequently found that some homopolymerization of the olefinic compound occurs simultaneously with functionalization of the PPE. This is especially true with olefinic epoxides. Since the presence of homopolymer is not beneficial for the purposes of the invention, removal thereof is often advisable. It may be achieved by conventional means, typically involving precipitation of a methylene chloride complex of the PPE as described by Factor et al. in J. Polymer Sci. Polymer Letters Ed. 7, 205-209 (1969).

The most preferred epoxy functional PPE is epoxytriazine-capped PPE disclosed in Brown et al., U.S. Pat. No. 5,096,979 which is incorporated herein by reference. This type of capped polymer contains end groups of the formula (III): 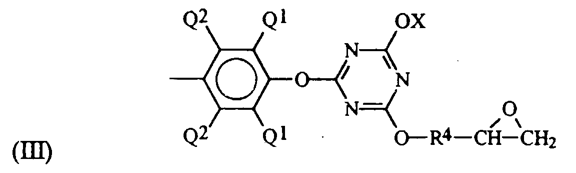 wherein Q¹ and Q² are described above, X is an alkyl, cycloalkyl, aromatic group, or formula (IV): 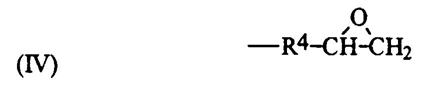 and R⁴ is a divalent aliphatic, alicyclic, heterocyclic, or substituted or unsubstituted aromatic hydrocarbon group.

The epoxytriazine-capped PPE materials may be prepared in solution by reacting at least one PPE polymer with an epoxychlorotriazine compound of the formula (V): 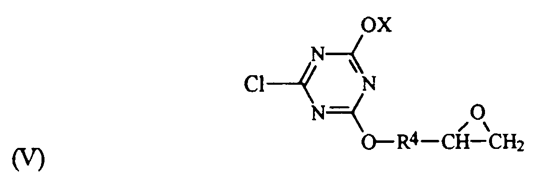 R⁴ and X having been defined above. The reaction can be carried out in the presence of a basic reagent such a pyridine. Examples of epoxychlorotriazine compounds are the following: 2-chloro-4,6-diglycidoxy-1,3,5-triazine, also known as diglycidyl chlorocyanurate ("DGCC"); 2-chloro-4-(n-butoxy)-6-glycidoxy-1,3,5-triazine, also known as n-butyl glycidyl chlorocyanurate ("BGCC"); and 2-chloro-4-(2,4,6-trimethylphenoxy)-6-glycidoxy-1,3,5-triazine, also known as mesityl glycidyl chlorocyanurate ("MGCC"). Suitable methods for the preparation of these epoxychlorotriazines are known in the art and described, for example in U.S. Pat. No. 4,895,945 (Brown et al.), the contents of which are incorporated herein by reference. As an illustration, 2,4,6-trichlorotriazine may be reacted with glycidol or combinations of glycidol with n-butanol or mesitol. Usually, about 1% to about 20% by weight epoxychlorotriazine is used for capping, based on the amount of PPE employed. The basic reagent is present in an amount effective to promote the reaction, usually about 0.5 equivalents per mole to 5 equivalents per mole of chloroepoxytriazine.

As an alternative to preparation in solution, an interfacial technique may be used to prepare the epoxychlorotriazine-capped PPE polymers, wherein the reaction is carried out in the presence of water, a water-soluble base such as sodium hydroxide, and a phase transfer catalyst such as tetra-alkylammonium halide compound. This technique is sometimes preferred because it results in a relatively low level of chemically-bound halide in the product

The capped PPE polymers may be isolated by conventional techniques, such as precipitation with a non-solvent

The PAS used in the present invention are derived from the known polymers containing arylene groups separated by sulfur atoms. They include poly(phenylene sulfide) resins (herein after known as "PPS") homopolymers and copolymers, for example, poly(p-phenylene sulfide) and substituted poly(phenylene sulfide) resins. Typical PPS comprise at least 70 molar %, preferably at least 90 molar %, of recurring units of the following structural formula (VI): 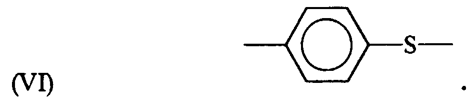 When the amount of said recurring units of formula (I) is less than 70 molar %, the heat resistance is insufficient.

The remaining 30 molar % or less, preferably 10 molar % or less, of the recurring units of PPS can be those of the following structural formulae (VII): 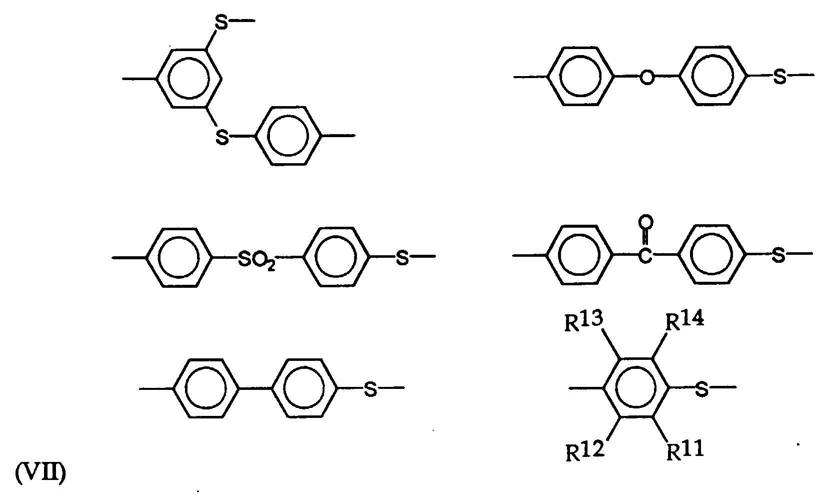 wherein, R¹¹, R¹², R¹³, R¹⁴ can be independently selected from the group consisting of hydrogen, halogen, alkyl, phenyl, alkoxy, nitro; amino and carboxy groups.

The PPS of the present invention may be a linear, branched or cured polymer or mixtures of the same. Linear PPS polymer of relatively low molecular weight may be prepared by, for example, a process disclosed in the specification of U.S. Pat. No. 3,354,129 which is incorporated herein by reference. Linear PPS polymers having a relatively high molecular weight may be prepared by, for example, the process disclosed in the specification of U.S. Pat. No. 3,919,177 which is incorporated herein by reference. Branched PPS resins may be prepared by the use of a branching agent such as, for example, 1,3,5-trichlorobenzene, which is disclosed in U.S. Pat. No. 4,749,163, which is incorporated herein by reference. The degree of polymerization of the polymers prepared by the processes of U.S. Pat. Nos. 3,354,129, 3,919,177 and 4,749,163 can be further increased by curing with heating afgter polymerization the same in an oxygen atmosphere or in the presence of a crosslinking agent such as, for example, a peroxide.

The PPS may be functionalized or unfunctionalized. If the PPS is functionalized, the functional groups may include, but are not limited to, amino, carboxylic acid, metal carboxylate, disulfide, thio and metal thiolate groups. One method for incorporation of functional groups into PPS can be found in U.S. Pat. No. 4,769,424, incorporated herein by reference, which discloses incorporation of substituted thiophenols into halogen substituted PPS. Another method involves incorporation of chlorosubstituted aromatic compounds containing the desired functionality reacted with an alkali metal sulfide and chloroaromatic compounds. A third method involves reaction of PPS with a disulfide containing the desired functional groups, typically in the melt or in a suitable high boiling solvent such as chloronaphthalene.

The melt viscosity of PPS used in the present invention is not particularly limited, however, a melt viscosity of at least 100 Poise is preferred from the viewpoint of the toughness of PPS per se and that of 10,000 Poise or less is preferred from the viewpoint of the moldability.

The PPS in this invention may also be treated to remove contaminating ions by immersing the resin in deionized water or by treatment with an acid, typically hydrochloric acid, sulfuric acid, phosphoric acid or acetic acid as found in Japanese Kokai Nos. 3236930-A, 1774562-A, 12299872-A and 3236931-A, incorporated herein by reference. For some product applications, it is preferred to have a very low impurity level in the PPS, represented as the percent by weight ash remaining after burning a sample of the PPS. Typically ash contents of the PPS of less than about 1% by weight are desirable with ash numbers less than about 0.5% by weight preferred and ash numbers less than about 0.1% by weight most preferred.

The olefinic copolymers (C) used in the present invention are epoxy functional elastomers. One type of epoxy functional elastomer useful as the olefinic copolymer are the copolymers of an α-olefin with a glycidyl ester of an α,β-unsaturated carboxylic acid. α-Olefin as used herein means ethylene, propylene, butene-1, etc. Among them, ethylene is preferred. The glycidyl esters of the α,β-unsaturated acids are compounds of the general formula (VII): 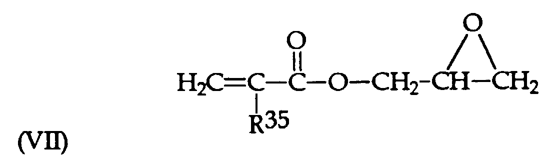 wherein R³⁵ represents a hydrogen atom or a lower alkyl group. Examples of the glycidyl esters of α,β-unsaturated acids include glycidyl acrylate, glycidyl methacrylate and glycidyl ethacrylate. The epoxy functional olefinic elastomer is preferably an olefinic copolymer containing of from about 60% to about 99.5% by weight of an α-olefin and of from about 0.5% to about 40% by weight, preferably of from about 3% to about 30% by weight, of a glycidyl ester of an α,β-unsaturated carboxylic acid based on the weight of the elastomer's composition. When the amount of the glycidyl ester is less than about 0.5% by weight, no intended effects can be obtained and when it exceeds about 40% by weight, gelation occurs during melt-blending with PPS resulting in degradation of the extrusion stability, moldability and mechanical properties of the product Suitable epoxy functional α-olefin elastomers include: ethylene-glycidyl acrylate copolymers, ethylene-glycidyl methacrylate copolymers, ethylene-glycidyl methacrylate-vinyl acetate terpolymers, ethylene-glycidyl methacrylate-methyl acrylate terpolymers, ethylene-ethyl acrylate-glycidyl methacrylate terpolymers. The preferred epoxy functional elastomers include those sold by Sumitomo Chemical Co., Ltd. under the trademarks IGETABOND and BONDFAST and also from Elf Atochem under the trademark LOTADER.

The elastomeric block copolymer is preferably a vinyl aromatic - conjugated diene block copolymer which comprise monoalkenyl arene (usually styrene) blocks (the "A" blocks) and conjugated diene (e.g. butadiene or isoprene) blocks (the "B" blocks) and can be represented as AB or ABA block copolymers. The block copolymers may be linear or radial and may also be tapered block copolymers. The conjugated diene blocks may be selectively hydrogenated.

Suitable AB type block copolymers are disclosed in, for example, U.S. Pat. Nos. 3,078,254, 3,402,159, 3,297,793, 3,265,765 and 3,594,452 and U.K. Pat. No. 1,264,741, all of which are incorporated herein by reference. Exemplary of typical species of AB block copolymers include: polystyrene-polybutadiene, polystyrene-polyisoprene and poly(alphamethylstyrene)-polybutadiene. Such AB block copolymers are available commercially from a number of sources, including Phillips 66 Co. under the trademark SOLPRENE, and Shell Chemical Co. under the trademark KRATON. Other suitable elastomeric block copolymers also include SEB and SEP block copolymers (polystyrene-poly(ethylene butylene) and polystyrene poly(ethylene propylene) block copolymers).

Additionally, ABA triblock copolymers and processes for their production as well as hydrogenation, if desired, are disclosed in U.S. Pat. Nos. 3,149,182; 3,231,635; 3,462,162; 3,287,333, 3,595,942; 3,694,523 and 3,842,029, all of which are incorporated herein by reference. Examples of ABA triblock copolymers include: polystyrene-polybutadiene-polystyrene (SBS), polystyrene-polyisoprene-polystyrene (SIS), polystyrene-poly(ethylene butylene)-polystyrene (S-EB-S), poly(α-methylstyrene)-polybutadiene-poly(α-methylstyrene) and poly(α-methylstyrene)-polyisoprene-poly(α-methylstyrene). Particularly preferred triblock copolymers are available commercially from Shell Chemical Co. under the trademarks CARIFLEX, KRATON D and KRATON G. The preferred triblock copolymer is G1651 from Shell Chemical Company; the preferred diblock copolymers are G1702 or G1701 from Shell Chemical Company.

The compositions of the present invention may also comprise at least one reinforcing filler. Suitable reinforcing fillers are those which increase the rigidity of the composition. Amongst these, fibrous materials are preferred, in particular glass fibers made from low alkali E-glass, having a fiber diameter of from 8 to 14 µm, the length of the glass fibers in the finished injection molding being from 0.01 mm to 0.5 mm. The glass fibers may be employed as rovings or as chopped or milled glass fibers, and may be provided with a suitable finish and an adhesion promoter or promoter system based on silanes. The amount of reinforcing fillers is advantageously from about 5% to about 60% by weight, especially from about 10% to about 35% by weight; all based on the total weight of the composition.

However, other fibrous reinforcing materials, e.g. carbon fibers, potassium titanate single-crystal fibers, gypsum fibers, aluminum oxide fibers or asbestos may also be incorporated. Non-fibrous fillers, e.g. glass beads, hollow glass beads, chalks, talcs, micas, quartzes and natural or calcined kaolins are further preferred fillers, as are combinations of these materials, including with glass fibers. Like the glass fibers, these latter fillers may be provided with a finish and/or an adhesion promoter or adhesion promoter system.

The compositional ratios of the present invention can range from a level of about 10% to about 95% by weight of functionalized PPE, about 10% to about 95% by weight of PPS, about 1% to about 20% by weight of epoxy functional elastomer and about 1% to about 20% by weight of elastomeric block copolymer in which all percent by weight ranges are based upon the total weight of the composition.

The composition preferably comprises the functionalized PPE at a level, expressed as percentages by weight of the PPE, PPS, epoxy functional olefinic elastomer and elastomeric block copolymer, of from about 10% to about 60% by weight, more preferably between about 25% to about 40% by weight, and most preferably from about 30% to about 35% by weight The composition preferably comprises the PPS at a level, expressed as percentages by weight of the PPE, PPS, epoxy functional olefinic elastomer and elastomeric block copolymer, of from about 25% to about 85% by weight, more preferably from about 40% to about 65% by weight, and most preferably from about 50% to about 60% by weight The composition preferably comprises the epoxy functional elastomer at a level, expressed as percentages by weight of the PPE, PPS, epoxy functional olefinic elastomer and elastomeric block copolymer, of about 2% to about 18% by weight based on the total weight of the composition, more preferably from about 5% to about 15% by weight, and most preferably from about 7% to about 12% by weight The composition preferably comprises the elastomeric block copolymer at a level, expressed as percentages by weight of the PPE, PPS, epoxy functional olefinic elastomer and elastomeric block copolymer, of from about 2% to about 18% by weight, more preferably from about 3% to about 10% by weight, and most preferably from about 4% to about 7% by weight Preferably the PPS and the functional PPE are in a weight ratio of between about 75:25 (PPS:functional PPE) and about 30:70, more preferably between about 70:30 and about 50:50, and most preferably between about 67:33 and about 62:38. Preferably the epoxy functional elastomer and the elastomeric block copolymer are in the composition in a weight ratio of between about 15:2 and about 5:10, more preferably between about 12:3 and about 6:6, and most preferably between about 10:6 and about 7:5. Preferably the combined total weight percent of epoxy functional elastomer and elastomeric block copolymer in the PPE, PPS, epoxy functional olefinic elastomer and elastomeric block copolymer, is between about 5% and about 21% by weight based on the PPE, PPS, epoxy functional olefinic elastomer and elastomeric block copolymer, more preferably between about 8% and about 16% by weight by weight thereof, and most preferably between about 10% and about 14% by weight thereof. Preferably the composition is substantially free of additional resin materials such as polyesters, polyamides and polycarbonate resins. Determination of an exact ratio for a composition is, in part, determined by the intended ultimate end-use application of the composition and the necessary properties needed for the application.

The present compositions exhibit improvements in ductility combined with higher flow, two properties which are critical in combination for automotive vertical body panel applications. The compositions further exhibit low coefficients of thermal expansion, low moisture absorption, high heat distortion temperatures, high chemical resistance and long term heat stability. Furthermore, the present compositions exhibit enhanced falling dart impact resistance and tensile elongation at break.

The composition may contain or be free of conventional additives such as plasticizers, stabilizers, antioxidants, crystallization nucleants, flame retardants or lubricants.

The preparation of the compositions of the present invention is normally achieved by blending the ingredients under conditions for the formation of an intimate blend. Such conditions often include mixing in single or twin screw type extruders or similar mixing devices which can apply a shear to the components. It is often advantageous to apply a vacuum to the melt through a vent port in the extruder to remove volatile impurities in the composition. The compositions of the present invention are useful for making molded articles such as housings for electrical connectors in under-the-hood automotive applications, and are useful for making various other molded articles.

### Examples

The compositions of Table 1 were extruded on a Werner-Pfleiderer twin-screw extruder at a temperature of about 600°F with a vacuum of 10-20 inches Hg applied to the melt during compounding. The resultant compositions were molded using a Toshiba injection molding machine using a temperature set of about 600°F and a mold temperature of about 250°F. Samples of the compositions were also subjected to measurement of notched Izod impact strength according to ASTM D256 (employing a sample size of 2.5 inch by 0.5 inch by 0.125 inch), Dynatup (energy to fracture falling dart test) strength according to ASTM D3763 (using 4 inch diameter by 0.125 inch disks), flexural modulus and flexural strength according to ASTM D790 (employing a samples size of 6 inch by 0.5 inch by 0.25 inch), heat deflection under loads of 66 and 264 psi according to ASTM D648 (employing a sample size of 6 inch by 0.5 inch by 0.25 inch) and tensile yield and tensile elongation at break according to ASTM D638. The viscosities (MV) were measured under the described conditions using an Instron capillary rheometer at 300°C, 5 kg of weight

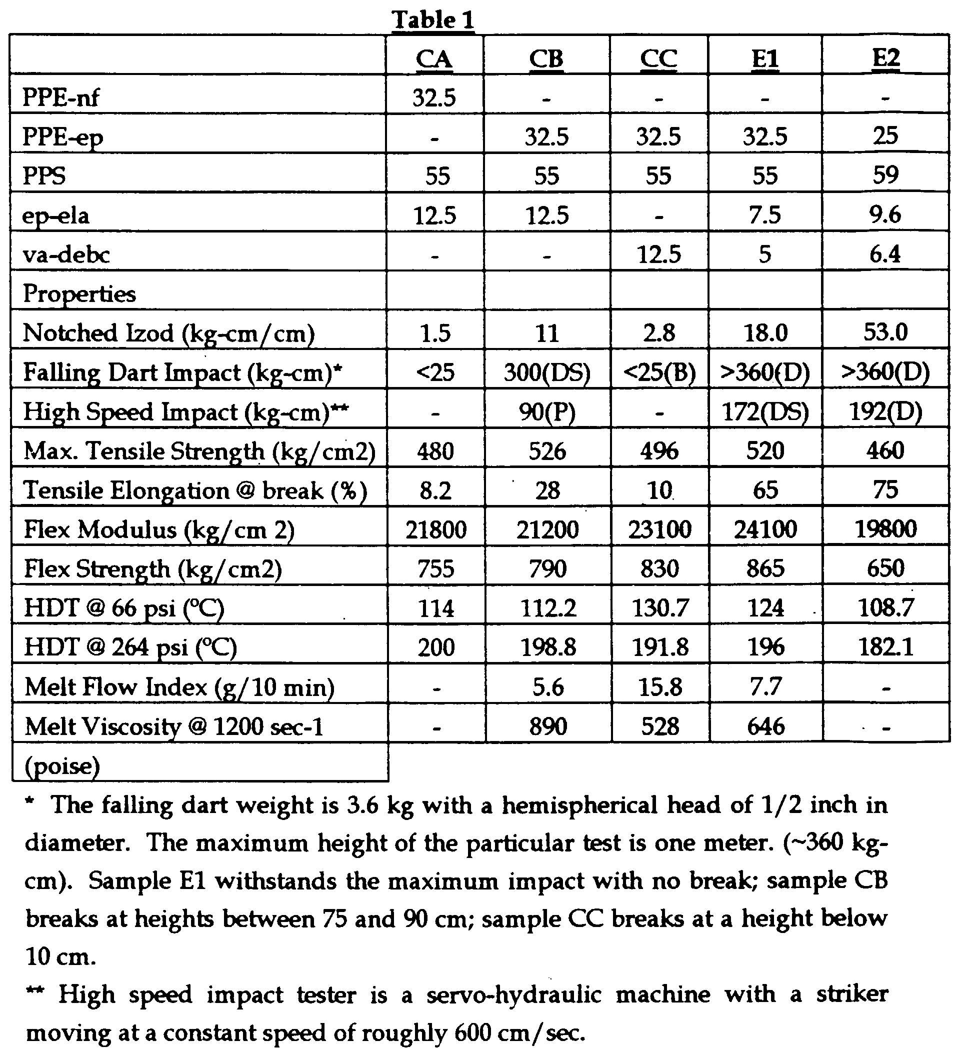

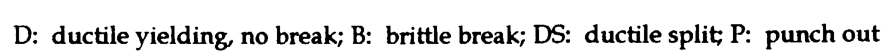

PPE-nf is a non-functionalized poly(phenylene ether) resin; PPE-ep is an epoxy functionalized poly(phenylene ether) resin; PPS is a poly(phenylene sulfide) resin; EP-ela is an epoxy functional elastomer which is an ethylene/glycidyl methacrylate copolymer; Va-debc is a elastomeric block copolymer which is a polystyrene-poly(ethylene butylene)-polystyrene block copolymer.

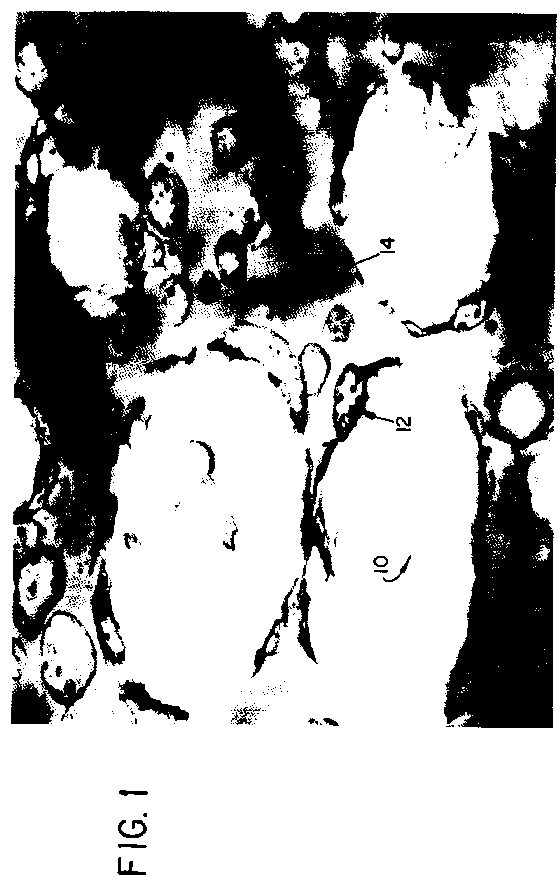

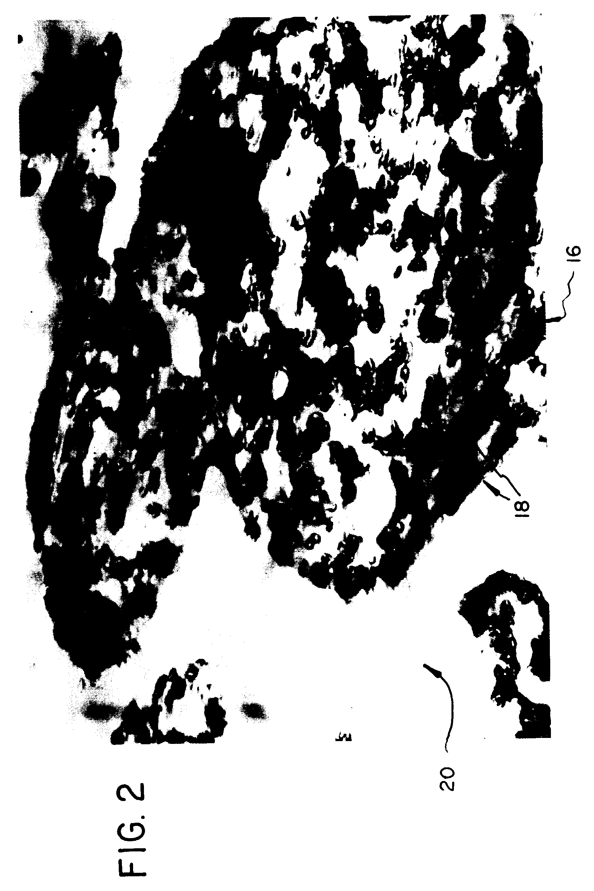

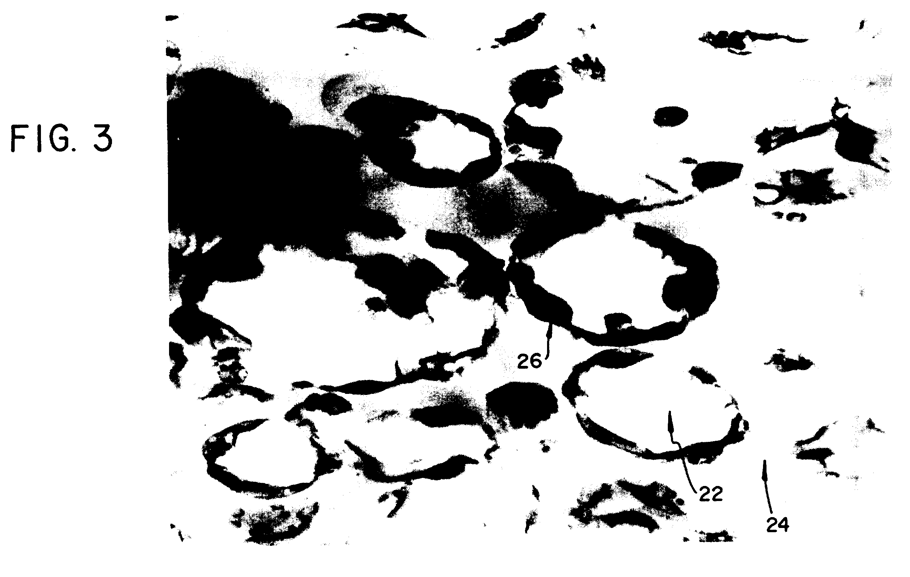

The epoxy functional PPE, PPS, epoxy functional elastomer and vinyl aromatic-diene block copolymer compositions of experimental examples 1 (E1) and 2 (E2) exhibit pronounced ductility and tensile elongation improvements over comparative examples A, B and C (CA, CB, CC) while maintaining desired heat distortion temperatures at high load (264 psi), low shrinkage and reduced flash. Additionally, the compositions of the present invention exhibit an unexpected morphology which provides enhanced ductility properties. Figure 1 is a transmission electron micrograph depicting the morphology of comparative sample B (CB). In this sample the PPE (10) and the epoxy functional olefinic elastomer (12) are independent dispersed phases within the PPS (14) continuous phase. Figure 2 is a transmission electron micrograph depicting the morphology of comparative sample C (CC). In this sample, the elastomeric block copolymer (16) is mostly dispersed within PPE (18) phase, which is in turn dispersed within the continuous PPS (20) continuous phase. It is noteworthy that the elastomeric block copolymer (16) also appears to be, in general, evenly dispersed within the PPE (18) phase. Figure 3 is a transmission electron micrograph depicting the morphology of example 1 (E1). In this example, the PPE (22) is a dispersed phase, with an average particle size typically less than 3 microns in diameter, within the PPS (24) continuous phase. The elastomeric block copolymer and epoxy olefinic elastomer mostly reside at the interface area (26) between the PPE (22) and PPS (24) resin phases. It is unexpected that the elastomeric materials would reside in the observed manner for the dual elastomer compositions in view of the observed morphologies of the control samples.

## Claims

1. A composition comprising:
a) a poly(phenylene ether) resin selected from the group consisting of unfunctionalized poly(phenylene ether) resins, functionalized poly(phenylene ether) resins, and mixtures of unfunctionalized poly(phenylene ether) resins and functionalized poly(phenylene ether) resins;
b) a poly(arylene sulfide) resin;
c) an epoxy functional olefinic elastomer; and
d) an elastomeric block copolymer.

2. The composition of Claim 1, wherein the functionalized poly(phenylene ether) resin is functionalized with a moiety selected from the group consisting of amino, hydroxy, carboxylic acid, epoxy and anhydride.

3. The composition of Claim 2, wherein the functionalized poly(phenylene ether) resin is epoxy functionalized.

4. The composition of Claim 3, wherein the epoxy functionalized poly(phenylene ether) resin is a poly(phenylene ether) resin capped with an epoxytriazine compound.

5. The composition of Claim 1, wherein the epoxy functional olefinic elastomer comprises about 60% to about 99.5% by weight of an α-olefin and about 0.5% to about 40% by weight of a glycidyl ester of an α,β-unsaturated carboxylic acid.

6. The composition of Claim 1, wherein the poly(arylene sulfide) resin has an ash content less than about 0.5% by weight based on the weight of the poly(arylene sulfide).

7. The composition of Claim 1, wherein the elastomeric block copolymer is an ABA triblock copolymer.

8. The composition of Claim 7, wherein the elastomeric block copolymer is a polystyrene-poly(ethylene butylene)-polystyrene block copolymer.

9. The composition of Claim 1, wherein the poly(phenylene ether) resin is present in amount from about 10 to about 95% by weight, the poly(arylene sulfide) resin is present in amount from about 10% to about 95% by weight, the epoxy functional olefinic elastomer is present in amount from about 1% to about 20% by weight, and the elastomeric block copolymer is present in amount from about 1% to about 20% by weight, all based on the total weight of components a through d.

10. The composition of Claim 9, wherein the poly(phenylene ether) resin is present in amount from about 10% to about 60% by weight, the poly(arylene sulfide) resin is present in amount from about 25% to about 85% by weight, the epoxy functional olefinic elastomer is present in amount from about 1% to about 20% by weight, and the elastomeric block copolymer is present in amount from about 1% to about 20% by weight; all based on the total weight of the composition.

11. The composition of Claim 9, wherein the poly(phenylene ether) resin is present in amount from about 60% to about 95% by weight, the poly(arylene sulfide) resin is present in amount from about 5% to about 40% by weight, the epoxy functional olefinic elastomer is present in amount from about 1% to about 20% by weight, and the elastomeric block copolymer is present in amount from about 1% to about 20% by weight; all based on the total weight of the composition.

12. The composition of Claim 1, wherein the poly(arylene sulfide) resin forms a matrix, the poly(phenylene ether) resin forms particles which are located within the poly(arylene sulfide) resin and the epoxy functional olefinic elastomer and the elastomeric block copolymer are located predominately adjacent the interface of the particles and the matrix.

13. The composition of Claim 12,wherein the poly(phenylene ether resin particles have an average diameter less than about 3 microns.

14. The composition of Claim 12, wherein the poly(phenylene ether) resin is present at a level of from about 25% to about 40% by weight based on the total weight of the composition, and the poly(arylene sulfide) resin is present at a level of from about 40% to about 65% by weight; all based on the total weight of the composition.

15. The composition of Claim 12, wherein the poly(phenylene ether) resin is present at a level of from about 30% to about 35% by weight, and the poly(arylene sulfide) resin is present at a level of from about 50% to about 60% by weight; all based on the total weight of the composition.

16. The composition of Claim 1, wherein the weight ratio of the poly(arylene sulfide) resin to the poly(phenylene ether) resin is between about 70:30 to about 50:50.

17. The composition of Claim 1, wherein weight ratio of the epoxy functional olefinic elastomer to the block copolymer is between about 10:6 to about 7:5.

18. The composition of Claim 1, further comprising at least one reinforcing filler selected from the group consisting of glass fibers, carbon fibers, potassium titanate fibers, gypsum fibers, aluminum oxide fibers, asbestos, glass beads, hollow glass beads, chalks, talcs, micas, quartzes, natural kaolins, calcined kaolins or mixtures of the foregoing.

19. A composition comprising a reaction product of a poly(phenylene ether) resin selected from the group consisting of unfunctionalized poly(phenylene ether) resins, functionalized poly(phenylene ether) resins, and mixtures of unfunctionalized poly(phenylene ether) resins and functionalized poly(phenylene ether) resins and at least one resin of the group consisting of poly(arylene sulfide) resins, epoxy functional olefinic elastomers, and elastomeric block copolymers.

20. A composition consisting essentially of:
a) poly(phenylene ether) resin selected from the group consisting of unfunctionalized poly(phenylene ether) resins, functionalized poly(phenylene ether) resins, and mixtures of unfunctionalized poly(phenylene ether) resins and functionalized poly(phenylene ether) resins;
b) a poly(arylene sulfide) resin;
c) an epoxy functional olefinic elastomer; and
d) an elastomeric block copolymer.

21. An article molded from the composition of any preceding claim.
